# EUROPÄISCHE PATENTSCHRIFT

(11) **EP 0 334 275 B1**
(45) Veröffentlichungstag und Bekanntmachung des Hinweises auf die Patenterteilung: **18.05.1994**
(21) Anmeldenummer: 89105000.7
(22) Anmeldetag: 21.03.1989
(51) Int. Cl.: B60T 8/32

(54) **Verfahren zum Regeln des Bremsdruckes in einer ABS-Fahrzeugbremsanlage**
Brake pressure regulating procedure, in an antiskid-vehicle-brake arrangement
Procédé pour réguler la pression de freinage dans un dispositif de freinage à antiblocage de véhicule

(30) Priorität: 24.03.1988 DE 3810020
(43) Veröffentlichungstag der Anmeldung: 27.09.1989
(73) Patentinhaber: LUCAS INDUSTRIES public limited company, Birmingham, B19 2XF West Midlands (GB)
(72) Erfinder: Braschel, Volker, D-5450 Neuwied (DE)
(74) Vertreter: von Hellfeld, Axel, Dr. Dipl.-Phys.

(56) Entgegenhaltungen:
- EP-A- 0 125 614
- DE-A- 2 930 378
- DE-A- 3 610 185
- US-A- 4 585 280

## Beschreibung

Die Erfindung betrifft ein Verfahren zum Regeln des Bremsdruckes in einer blockiergeschützten Fahrzeugbremsanlage, bei dem das Drehverhalten eines gebremsten Rades gemessen und in Abhängigkeit von seinem Schlupf und/oder seiner Drehverzögerung bei Überschreiten eines vorgegebenen Schwellwertes der Bremsdruck abgebaut, danach wieder aufgebaut und dann während einer Druckhaltephase konstant gehalten wird.

Ein solches Verfahren ist aus der DE-OS 36 10 185 bekannt.

Zur Optimierung der Regelung des Bremsdruckes, d.h. zur Einstellung des Bremsdruckes über alle Regelzyklen einer ABS-Bremsung auf solche Werte, daß das Rad während eines möglichst großen Bruchteiles der Gesamt-Bremszeit im optimalten Bereich der Reibbeiwert/Schlupf-Kurve läuft, ist dort vorgesehen, den Bremsdruckaufbau in zwei Phasen zu unterteilen. In einer ersten Aufbauphase wird der Bremsdruck mit relativ steilem Gradienten, also sehr schnell, gesteigert, während in einer anschließenden Phase der Bremsdruck mit geringerem Gradienten, also langsamer, erhöht wird. Die für beide Aufbauphasen vorgesehenen Zeitspannen werden in Abhängigkeit von der Druckabbauzeitspanne im vorhergegangenen Regelzyklus eingestellt.

Auch aus der EP-A2 0 125 614 ist ein Verfahren zum Regeln des Bremsdruckes bekannt, bei dem im Anschluß an einen Druckaufbau der Bremsdruck für eine bestimmte Zeitspanne konstant gehalten wird. Auch dort wird aber nur die Zeitspanne für den Druckaufbau in Abhängigkeit von zuvor gemessenen Parametern eingestellt, während die Druckhaltephase, also diejenige Zeitspanne, in welcher der Bremsdruck konstant gehalten wird, nicht in Abhängigkeit von zuvor gemessenen Regelgrößen variiert wird.

Bei dem vorstehend genannten Stand der Technik ist schon erkannt worden, daß zur Erzielung eines kurzen Bremsweges der Bremsdruck nach einer Absenkung möglichst schnell soweit erhöht werden sollte, daß sich ein Schlupf einstellt, bei dem eine gute Bremswirkung erreicht wird. Bei dem Verfahren gemäß der DE-OS 36 10 185 soll aber der Bremsdruck am Ende der ersten Druckaufbauphase, welche mit steilem Gradienten Durchgeführt wird, noch soweit vom Blockierdruck entfernt sein, daß während eines anschließenden, gepulsten Druckaufbaus der Blockierdruck erst nach einer relativ langen Zeitspanne von typischerweise 300 bis 400 ms erreicht wird. Die bei diesem Stand der Technik vorgesehene Berechnung der Druckaufbauzeitspanne in Abhängigkeit von der Druckabbauzeitspanne des vorangegangenen Regelzyklus ist aber mit dem Nachteil behaftet, daß die Druckabbauzeitspannen abhängig vom Druck im Radbremszylinder sind. Die Ansteuerzeiten in den einzelnen Regelzyklen während einer Bremsung können sich deshalb erheblich unterscheiden, weshalb die Bestimmung der richtigen Zeitdauer für den schnellen Druckanstieg schwierig werden kann. Ist aber die Zeitdauer des schnellen Druckanstieges zu kurz, so läuft das gebremste Rad unnötig lange mit einem geringeren Schlupf als dem optimalen, so daß Bremsweg verschenkt wird.

Mit den bekannten Verfahren ist es deshalb noch nicht möglich, den Bremsdruck so schnell bis unmittelbar unter den Blockierdruck zu steigern, daß der kürzeste, physikalisch mögliche Bremsweg erreicht wird. Bei den bekannten Verfahren mit zweistufigem Druckaufbau mit jeweils unterschiedlichen Gradienten kann der Druck auch deshalb nicht sofort bis unmittelbar an den Blockierdruck herangeführt werden, weil sich hiermit eine zu hohe Regelfrequenz ergeben würde. In der DE-PS 27 06 278 ist erläutert, daß die Periodendauer der Regelzyklen nicht beliebig klein gemacht werden kann, weil es für jedes Fahrzeug eine Grenzregelfrequenz gibt, die nicht überschritten werden darf und die im allgemeinen durch die Resonanzfrequenz der Achsen des Fahrzeugs bestimmt ist.

Der Erfindung liegt die Aufgabe zugrunde, das gattungsgemäße Verfahren zum Regeln des Bremsdruckes in einer blockiergeschützten Fahrzeugbremsanlage so weiterzubilden, daß eine weitere Verkürzung des Bremsweges erreicht wird.

Erfindungsgemäß wird diese Aufgabe bei einem gattungsgemäßen Verfahren dadurch gelöst, daß die Länge der Druckhaltephase in Abhängigkeit von einem Vergleich der Druckabbauzeitspannen und/oder der Druckaufbauzeitspannen des gerade durchgeführten Regelzyklus und zumindest eines vorangegangenen Regelzyklus eingestellt wird.

Erfindungsgemäß wird also der Bremsdruck mit einem einzigen, möglichst steilen Gradienten bis knapp unter den Blockierdruck erhöht und dann während einer sogenannten Druckhaltephase konstant gehalten. Die Länge der Druckhaltephase wird im voraus in Abhängigkeit von zuvor gemessenen Größen berechnet, nämlich entsprechend einem Vergleich der Druckabbau- und/oder Druckaufbauzeitspannen. Bevorzugt werden für die Bestimmung der Länge der Druckhaltephase die vorangegangenen Druckabbauzeitspannen miteinander verglichen. Unterscheidet sich die Druckabbauzeitspanne des gerade durchgeführten Regelzyklus nicht wesentlich von derjenigen des vorangegangenen Regelzyklus, so kann die Druckhaltephase relativ lang eingestellt werden, zum Beispiel auf Werte von 300 bis 800 ms, vorzugsweise 300 bis 400 ms.

Bei guter Übereinstimmung der gemessenen Druckabbauzeiten in den einzelnen Regelzyklen kann auch die erforderliche Druckaufbauzeit im voraus sehr genau berechnet werden.

Erfindungsgemäß ist also ein sehr schneller Aufbau des Bremsdruckes bis unmittelbar an den Blockierdruck möglich, so daß das Rad sehr schnell in einen Schlupfbereich gerät, in dem eine maximale Bremswirkung erzielt wird. Längere Phasen einer Unterbremsung (also Phasen mit geringerem Bremsdruck am Rad als dem möglichen) werden erfindungsgemäß dadurch vermieden, daß bei unregelmäßigen Fahrbahnverhältnissen, was sich in unterschiedlichen Druckabbauzeitspannen oder Druckaufbauzeitspannen wiederspiegelt, eine relativ kurze Druckhaltephase vorgesehen ist, nach der der Bremsdruck weiter erhöht wird, um festzustellen, ob das Rad in einen instabilen Bereich gerät.

Erfindungsgemäß wird also für jeden Regelzyklus ab dem ersten Zyklus einer Bremsung die Länge der Druckhaltephase neu berechnet. Hierfür wird die Druckabbauzeitspanne des gerade durchgeführten Regelzyklus (welche sich in bekannter Weise durch Überschreiten bestimmter Schwellwerte des Schlupfes und/oder der Drehverzögerung des Rades ergibt) mit zumindest der Druckabbauzeitspanne im vorangegangenen Regelzyklus oder mit mehreren Druckabbauzeitspannen in mehreren vorangegangenen Regelzyklen verglichen. In abhängigkeit vom Maß der Übereinstimmung wird die Druckhaltephase bis auf einen vorgegebenen Maximalwert verlängert. Andererseits wird in Abhängigkeit vom Maß der Abweichung zwischen den Druckabbauzeitspannen die Druckhaltephase bis auf einen Minimalwert von wenigen Millisekunden verkürzt.

Am Ende einer Druckhaltephase wird der Druck kurzzeitig auf einen Maximalwert erhöht, um festzustellen, ob sich der Reibbeiwert der Fahrbahn möglicherweise verbessert hat, oder um die eine Blockierneigung des Rades anzeigende Schwelle zu überschreiten und anschließend den Bremsdruck wieder abzubauen und die Lenkfähigkeit des Rades beizubehalten.

Nachfolgend wir die Erfindung anhand eines in der Zeichnung dargestellten Ausführungsbeispieles näher erläutert. Es zeigt:
- Fig. 1: über einer gemeinsamen Zeitskala den Verlauf einer Referenzgeschwindigkeit und der Radumfangsgeschwindigkeit sowie den zugehörigen Verlauf des Bremsdruckes über fünf Regelzyklen, und
- Fig. 2: eine Fig. 1 entsprechende Darstellung über zwei Regelzyklen in vergrößertem Maßstab.

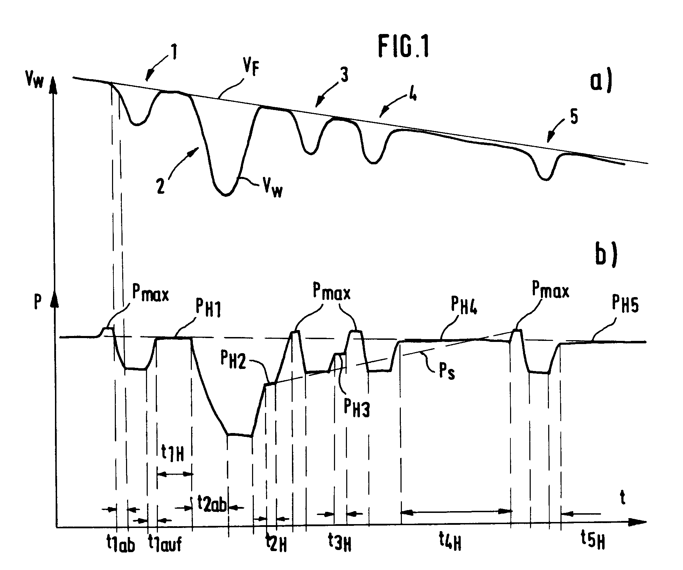

In Fig. 1a ist in üblicher Weise über der Zeit ein typischer Verlauf einer Referenzgeschwindigkeit v_{F} (auch Fahrzeuggeschwindigkeit genannt) sowie der Verlauf der Umfangsgeschwindigkeit des blockiergeschützt gebremsten Rades aufgetragen. Dargestellt sind fünf Regelzyklen 1, 2, 3, 4 und 5 einer Bremsung.

In bekannter Weise wird der Schlupf des Rades, also die Differenz zwischen der Radumfangsgeschwindigkeit v_{W} und der Referenzgeschwindigkeit v_{F} für die Regelung des Bremdruckes p herangezogen. Dem Fachmann ist auch bekannt, daß der Bremsdruck p zusätzlich oder alternativ auch in Abhängigkeit von der Drehverzögerung (positiv und negativ) des gebremsten Rades einstellbar ist. Diese Zusammenhänge sind bekannt, so daß auf ihre Beschreibung verzichtet werden kann.

Auch die Mittel zum Messen der für die Regelung herangezogenen Größen sowie für die Steuerung des Bremsdruckes sind dem Fachmann heute allgemein bekannt.

Die Erfindung betrifft die Einstellung der Länge der sogenannten Druckhaltephasen, welche in Fig. 1b mit p_{H1}, p_{H2}, p_{H3}, p_{H4} und p_{H5} angedeutet sind. Die zugehörigen Zeitspannen sind in Fig. 1b mit t1_{H}, t2_{H}, t3_{H}, t4_{H}, und t5_{H}, bezeichnet.

Im ersten Regelzyklus 1 wird eine Druckabbauzeitspanne t1_{ab} gemessen und in einer Verarbeitungsschaltung (Prozessor) abgespeichert. Die Länge der Druckabbauzeitspanne t1_{ab} ergibt sich in herkömmlicher Weise durch Überschreiten vorgegebener Schwellwerte. Anschließend wird der Bremsdruck bei Überschreiten weiterer vorgegebener Schwellwerte bezüglich Schlupf und/oder Radbeschleunigung während der Zeitspanne t1_{auf} wieder erhöht. Die Länge der Zeitspanne t1_{auf} ergibt sich aus dem Überschreiten von Schwellwerten oder wird im voraus in bekannter Weise berechnet. Im Anschluß an die Druckaufbauzeitspanne t1_{auf} wird der Bremsdruck p während der Zeitspanne t1_{H} auf dem Wert p_{H1} gehalten. Da während des ersten Regelzyklus 1 noch kein Vergleich der Druckabbauzeitspanne t1_{ab} mit vorangegangenen Regelzyklen möglich ist, wird zunächst die Zeitspanne t1_{H} der Druckhaltephase auf einen kleinen Wert von z.B. 50 ms eingestellt.

Es sei angenommen, daß die Bremsung auf einer unregelmäßigen Fahrbahn erfolgt und am Ende der Druckhaltephase t1_{H} des ersten Regelzyklus eine kurzzeitige Verschlechterung des Reibbeiwertes erfolgt, also das Rad zum Beispiel über eine Eisplatte läuft. Dementsprechend wird die anschließende Druckabbauzeitspanne t2_{ab} relativ lang, d.h. die Druckabbauzeitspanne t2_{ab} des zweiten Regelzyklus unterscheidet sich deutlich von der Druckabbauzeitspanne t1_{ab} des ersten Regelzyklus.

Im Anschluß an die nachfolgende Druckaufbauzeitspanne des zweiten Regelzyklus wird deshalb die Druckhaltephase t2_{H} des zweiten Regelzyklus, in welcher der Bremsdruck auf dem Wert p_{H2} konstant gehalten wird, sehr viel kürzer eingestellt als die Länge t1_{H} der Druckhaltephase im ersten Regelzyklus 1. Es sei nun angenommen, daß das gebremste Rad die Eisplatte wieder verlassen hat und auf einer Fahrbahn mit besserem Reibbeiwert läuft. Es wird deshalb während der Druckhaltephase t2_{H} keine Blockiergefahr anzeigende Schwelle überschritten und der Druck mit relativ steilem Gradienten auf dem Maximalwert pₘₐₓ erhöht. Sodann wird aufgrund des erhöhten Bremsdruckes wieder ein Blockiergefahr anzeigender Schwellwert überschritten und ein dritter Regelzyklus 3 (siehe Fig. 1a) eingeleitet. Die Druckabbauzeitspanne ergibt sich wie bei den oben beschriebenen Regelzyklen 1 und 2, ebenso die Druckaufbauphase. Da das Rad im Regelzyklus 3, wie oben vorausgesetzt, nicht mehr auf der für den Regelzyklus 2 maßgeblichen Eisplatte läuft, ist die Druckabbauzeitspanne im dritten Regelzyklus wesentliche kürzer als im zweiten Regelzyklus wie Fig. 1b unmittelbar zu entnehmen ist. Dementsprechend ist die Länge t3_{H} der Druckhaltephase im dritten Regelzyklus, in welcher der Bremsdruck auf dem Wert p_{H3} konstant gehalten wird, relativ kurz. Im Anschluß an die kurze Zeitspanne t3_{H} der Druck-Konstanthaltung im dritten Regelzyklus wird der Druck wieder mit steilem Gradienten auf den Maximalwert pₘₐₓ erhöht und das Rad läuft wieder in einen blockiergefährdeten Bereich, so daß ein vierter Regelzyklus 4 eingeleitet wird. Die Fahrbahn hat ihre Eigenschaften nicht verändert, weshalb die Druckabbauzeitspanne im vierten Regelzyklus derjenigen des dritten Regelzyklus entspricht. Wegen der Übereinstimmung der Länge der Druckabbauzeitspannen im dritten und vierten Regelzyklus wird im vierten Regelzyklus die Länge t4_{H} der Druckhaltephase relativ lang, auf z.B. 300 bis 400 ms eingestellt. Das gebremste Rad wird also sehr schnell in einer einzigen Druckstufe bis kurz unter den Instabilitätsbereich geführt und relativ lange dort gehalten. Dies ist möglich, weil die benötigte Druckaufbauzeitspanne aus zumindest einem vorangegangenen Regelzyklus bekannt ist. Die so empirisch gewonnene Druckaufbauzeitspanne wird für den laufenden Regelzyklus herangezogen. Es ist möglich, den aus den vorangegangenen Regelzyklen gewonnenen Wert für die Druckaufbauzeitspanne um eine sehr kurze Zeitspanne (wenige Millisekunden, z.B. 3 ms) zu reduzieren, um knapp unter der mit Wahrscheinlichkeit zu erwartenden Regelschwelle zu bleiben. Im Anschluß an die relativ lange Zeitspanne t4_{H} der Druckhaltephase im vierten Regelzyklus erfolgt kurzzeitig eine Erhöhung des Bremsdruckes auf den Wert pₘₐₓ, um festzustellen, ob die Fahrbahn einen positiven Reibwertsprung (also eine Verbesserung des Reibbeiwertes) aufweist, oder ob bei Fehlen eines solchen "positiven" Reibbeiwertsprunges erneut eine Schlupf- und/oder Drehverzögerungsschwelle überschritten und somit gemäß Fig. 1 ein fünfter Regelzyklus eingeleitet wird. Da der Reibbeiwert, wie in Fig. 1 angenommen, gegenüber dem dritten und vierten Regelzyklus unverändert geblieben ist, ist die Druckabbauzeitspanne im fünften Regelzyklus gleich lang wie die Druckabbauzeitspannen im dritten und vierten Regelzyklus, so daß auch im fünften Regelzyklus die Länge t5_{H} der Druckhaltephase, in welcher der Bremsdruck auf dem Wert p_{H5} konstant gehalten wird, relativ lang eingestellt wird, so wie im vierten Regelzyklus.

In Fig. 1b ist zusätzlich mit gestrichelter Linie auch ein mit p_{S} bezeichneter Verlauf des Bremsdruckes eingezeichnet, welcher einem zweistufigem Druckaufbau mit unterschiedlichen Gradienten gemäß dem Stand der Technik entspricht (DE-OS 36 10 185). Ein Vergleich der Verläufe des Bremsdruckes gemäß der Kurve p_{S} einerseits mit der beschriebenen Kurve des erfindungsgemäßen Bremsdruckverlaufes zeigt, daß das gebremste Rad näher am kritischen Schlupfbereich läuft und somit eine bessere Bremswirkung erzielt wird.

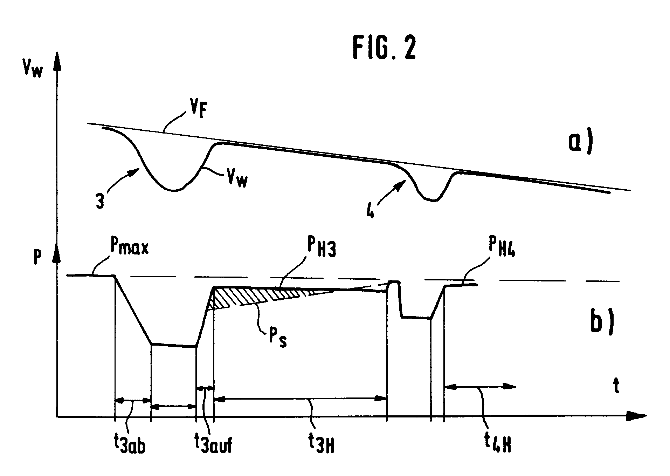

Fig. 2 macht dies in vergrößerter Darstellung noch deutlicher. Hier sind zwei mit 3 und 4 bezeichnete Regelzyklen dargestellt, also zwei Regelzyklen aus einer laufenden Bremsung herausgegriffen. Es sei angenommen, daß die Zeitspanne t3_{ab} des Druckabbaus im Regelzyklus 3 derjenigen des Druckabbaus im vorangegangenen Regelzyklus entspricht. Gemäß dem oben gesagten wird dann die Länge t3_{H} der Druckhaltephase im dritten Regelzyklus, in welcher der Druck auf dem Wert p_{H3} konstantgehalten wird, relativ lang eingestellt. Die Zeitspanne t3_{auf} ist ebenfalls relativ lang, so daß der Druck p_{H3} nur geringfügig unter dem Blockierdruck liegt. Der bekannte zweistufige Druckaufbau mit unterschiedlichen Gradienten ist in Kurve p_{S} dargestellt. Es ergibt sich demgegenüber ein Bremskraftgewinn, der in Fig. 2b durch die Schraffur veranschaulicht ist.

## Patentansprüche

1. Verfahren zum Regeln des Bremsdruckes in einer blockiergeschützten Fahrzeugbremsanlage, bei dem das Drehverhalten eines gebremsten Rades gemessen und in Abhängigkeit von seinem Schlupf und/oder seiner Drehverzögerung bei Überschreiten eines vorgegebenen Schwellenwertes der Bremsdruck abgebaut, danach wieder aufgebaut und dann während einer Druckhaltephase konstant gehalten wird,
dadurch **gekennzeichnet,**
daß die Länge (t1_{H}, t2_{H} ... t5_{H}) der Druckhaltephase in Abhängigkeit von einem Vergleich der Druckabbauzeitspanne (t1_{ab}, t2_{ab} ...) und/oder der Druckaufbauzeitspanne (t1_{auf}, t2_{auf}...) des gerade durchgeführten Regelspiels (1, 2, ..., 5) mit einer Druckabbauzeitspanne bzw. Druckaufbauzeitspanne in einem vorangegangenen Regelspiel derart eingestellt wird, daß die Länge der Druckhaltephase bei Übereinstimmung der verglichenen Druckabbauzeitspannen bzw. Druckaufbauzeitspannen länger als bei deren Abweichung eingestellt wird.

2. Verfahren nach Anspruch 1,
dadurch **gekennzeichnet,**
daß am Ende einer Druckhaltephase der Druck kurzzeitig erhöht wird.

3. Verfahren nach einem der Ansprüche 1 oder 2,
dadurch **gekennzeichnet,**
daß der Aufbau des Bremsdruckes bis zum Erreichen eines weiteren, vorgegebenen Schwellwertes erfolgt.

## Claims

1. A method of controlling the brake pressure in an anti-lock vehicle brake system, wherein the rotational behavior of a braked wheel is measured and the brake pressure is lowered in response to the slip and/or rotational retardation of the wheel if a given threshold value is exceeded, and is subsequently raised again, and then kept constant during a phase of steady pressure, **characterized** in that the duration (t_{1H}, t_{2H}, ... t_{5H}) of the pressure stability phase is adjusted in response to a comparison of the pressure reduction period (t1DOWN, t2DOWN...) and/or the pressure build-up period (t1UP, t2UP...) of the instantaneous control cycle (1, 2,...5) with a pressure reduction period or a pressure build-up period in a previous control cycle such that the duration of the phase of steady pressure becomes longer if the periods of pressure reduction or pressure build-up compared are in agreement than if they differ.

2. The method as claimed in claim 1, characterized in that the pressure is raised briefly at the end of a pressure stability phase.

3. The method as claimed in claim 1 or 2, characterized in that the pressure build-up continues until another predetermined threshold value is reached.

## Revendications

1. Procédé pour réguler la pression de freinage dans un dispositif de freinage à antiblocage pour véhicule, selon lequel le comportement en rotation d'une roue freinée est mesuré, et la pression de freinage est abaissée en fonction du glissement et/ou du ralentissement de la rotation de cette roue en cas de dépassement d'une valeur de seuil prédéterminée , puis la pression de freinage est remontée et ensuite maintenue constante pendant une phase de maintien de la pression,
caractérisé en ce que la durée t1_{H}, t2_{H}, ...t5_{H}) de la phase de maintien de la pression est réglée, en fonction d'une comparaison de la durée de diminution de la pression (t1_{ab}, t2_{ab} ...) et/ou de la durée de remontée de la pression (t1_{auf}, t2_{auf}, ...) avec, respectivement, une durée de diminution ou de remontée de pression d'un cycle de régulation précédent, de telle façon que la durée de la phase de maintien de la pression est plus longue dans le cas d'une concordance entre les durées respectives de diminution ou de remontée de la pression comparées, que dans le cas où elles présentent un écart.

2. Procédé suivant la revendication 1, caractérisé en ce qu'à la fin d'une phase de maintien de la pression, cette pression est augmentée pendant un court instant.

3. Procédé suivant la revendication 1 ou la revendication 2, caractérisé en ce que la montée de la pression de freinage se fait jusqu'à ce que soit atteinte une autre valeur de seuil prédéterminée.
